Europäisches Patentamt

European Patent Office

Office européen des brevets

(19)

(11) Veröffentlichungsnummer: **0 037 945**
**B1**

(12)

# EUROPÄISCHE PATENTSCHRIFT

(45) Veröffentlichungstag der Patentschrift:
**17.08.83**

(21) Anmeldenummer: **81102345.6**

(22) Anmeldetag: **27.03.81**

(51) Int. Cl.³: **G 11 B 15/58,** G 11 B 1/00

(54) **Abdeckvorrichtung für eine in einem Magnetbandgerät vorgesehene Unterdruckkammer zur Aufnahme einer Bandpufferschleife.**

(30) Priorität: **14.04.80 DE 3014205**

(43) Veröffentlichungstag der Anmeldung:
**21.10.81 Patentblatt 81/42**

(45) Bekanntmachung des Hinweises auf die Patenterteilung:
**17.08.83 Patentblatt 83/33**

(84) Benannte Vertragsstaaten:
**AT BE CH FR GB IT LI LU NL SE**

(56) Entgegenhaltungen:
**FR-A-2 205 888**
**US-A-3 124 317**
**US-A-3 703 997**
**IBM TECHNICAL DISCLOSURE BULLETIN, Band 15, Nr. 7, Dezember 1972, Seiten 2253—2254 New York, U.S.A. M.E. PRAHL et al.: »Tape unit door with sound deadening cavity«**

(73) Patentinhaber: **SIEMENS AKTIENGESELLSCHAFT,**
**Berlin und München Wittelsbacherplatz 2,**
**D-8000 München 2 (DE)**

(72) Erfinder: **Ilg, Herbert, Terofalstrasse 53,**
**D-8000 München 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Abdeckvorrichtung für eine in einem
## Magnetbandgerät vorgesehene Unterdruckkammer zur Aufnahme einer Bandpufferschleife

Die Erfindung bezieht sich auf eine Abdeckvorrichtung für eine in einem Magnetbandgerät vorgesehene Unterdruckkammer zur Aufnahme einer zwischen Bandspule und Bandantriebsmechanismus verlaufenden Bandpufferschleife, bestehend aus einem am Gehäuse des Magnetbandgerätes schwenkbar befestigten, zweiwandig ausgebildeten Deckel, dessen innere Wandung in geschlossenem Zustand des Deckels mit den Stirnflächen der Kammerwandung eine luftdichte Dichtung bildet.

Bekannte Magnetbandgeräte mit pneumatischer Bandantriebssteuerung weisen jeweils zwischen Bandspule und Bandantriebsmechanismus eine in einer Unterdruckkammer geführte Bandpufferschleife auf, wobei die Abdichtung dieser Unterdruckkammer durch übliche, bezüglich ihrer Oberfläche nicht besonders bearbeitete Glasplatten eines Deckels erfolgt. Dabei kann zur Geräuschdämmung der Deckel zweiwandig ausgebildet sein (US-A-3 703 997).

Im Vergleich zu bisher gebräuchlichen pneumatischen Bandschlaufensteuerungen, die von eventuell auftretenden Luftdruckschwankungen, bedingt durch undichte Unterdruckkammern, relativ unabhängig sind, erfordern moderne Bandschlaufensteuerungen, die mit einem bereits auf kleinste Druckunterschiede reagierenden Differenzdruckschalter arbeiten, eine dementsprechend sorgfältige optimale Abdichtung der Unterdruckkammer.

Der vorliegenden Erfindung liegt deshalb die Aufgabe zugrunde, eine Abdeckvorrichtung für derartige Unterdruckkammern mit einfachen Mitteln so zu verbessern, daß eine optimale Abdichtung gewährleistet ist.

Ausgehend von einer Abdeckvorrichtung der eingangs näher bezeichneten Art wird dies erfindungsgemäß in der Weise gelöst, daß die Wandungen des Deckels aus einer äußeren Trägerplatte und einer inneren flexiblen Abdeckplatte bestehen, zwischen denen mehrere längs der Kammerwandung verteilte Pufferelemente aus elastischem Material angeordnet sind und daß am Magnetbandgerät Haltemittel vorgesehen sind, die der Trägerplatte derart räumlich zugeordnet sind, daß die Trägerplatte bei geschlossenem Zustand in Richtung gegen die Kammerwandung gedrückt wird.

Vorteilhafte Weiterbildungen der Erfindung sind in den Unteransprüchen angegeben.

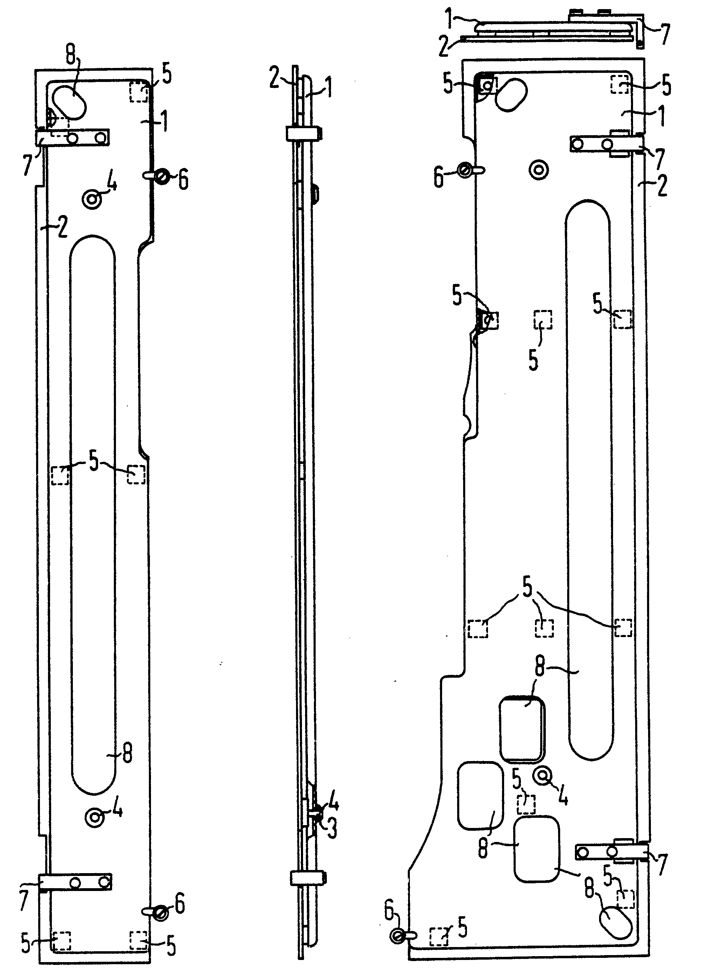

Ein Ausführungsbeispiel der Erfindung wird im folgenden anhand der Zeichnung näher erläutert.

Die Figur zeigt die für ein Magnetbandgerät mit zwei Unterdruckkammern vorgesehenen Abdeckvorrichtungen, die über die Überdruckkammern hinaus auch den benachbart angeordneten, in der Zeichnung nicht dargestellten Bandantriebsmechanismus mit abdecken. Die der linken Unterdruckkammer zugeordnete Abdeckung KAL ist dabei in Vorder- und Seitenansicht, die der rechten Kammer zugeordnete Abdeckung KAR in Vorder- und Unteransicht dargestellt. Die Abdeckvorrichtung besteht im einzelnen aus einer Trägerplatte 1 und einer flexiblen, relativ dünnen Abdeckplatte 2 aus vorzugsweise durchsichtigem Material, die mittels Führungsbolzen 3 und Sicherungsscheiben 4 an der Trägerplatte befestigt und in Achsrichtung der Führungsbolzen 3 relativ zur Trägerplatte 1 bewegbar gelagert ist. Zwischen Trägerplatte 1 und Abdeckplatte 2 sind mehrere aus elastischem Material, vorzugsweise aus Gummi oder dergleichen bestehende Pufferelemente 5 vorgesehen, die bezüglich ihrer Form, z. B. mit quadratischem Querschnitt, als Ring oder als Leiste beliebig ausgestaltet sein können. Sie sind in beliebiger Zahl längs der Kammerwandung angeordnet, so daß sich die flexible Abdeckplatte 2 bei geschlossener Abdeckvorrichtung eng an die Stirnflächen der Kammerwandung anschmiegt. Die Verwendung einer elastischen Abdeckplatte bietet dabei den Vorteil, daß sie sich einerseits eventuellen Unebenheiten an den Stirnflächen der Kammerwandungen anschmiegt, andererseits aber den Bewegungsfreiraum für das Magnetband in den angrenzenden Unterdruckkammern in keiner Weise einengt. Am oberen und unteren Ende der Trägerplatte 1 greifen Halteelemente in Form von Drehhebeln 6 an, die am Gehäuse des Magnetbandgerätes in axialer Richtung federnd gelagert sind. Die Federkraft ist dabei so bemessen, daß die Abdeckvorrichtung gegen die Kammerwandung gedrückt und ein eventuelles Zurückfedern der Abdeckvorrichtung verhindert wird. Die Trägerplatte 1, die mittels Scharnieren 7 schwenkbar am Gehäuse des Magnetbandgerätes befestigt ist, weist ferner, sofern sie aus nichtdurchsichtigem Material besteht, mehrere Sichtfenster 8 auf, so daß die Bewegung des Magnetbandes an kritischen Stellen, z. B. im Bereich der Umlenkrollen, der Magnetköpfe, sowie im Bereich der Unterdruckkammer selbst jederzeit kontrolliert werden kann. Die Trägerplatte 1 ist im Vergleich zur flexiblen Abdeckplatte relativ formstabil und besteht vorzugsweise aus tiefgezogenem Material, insbesondere Metall.

## Patentansprüche

1. Abdeckvorrichtung für eine in einem Magnetbandgerät vorgesehene Unterdruckkammer zur Aufnahme einer zwischen Bandspule und Bandantriebsmechanismus verlaufenden Bandpufferschleife, bestehend aus einem am Gehäuse des Magnetbandgerätes schwenkbar befestigten zweiwandig ausgebildeten Deckel, dessen innere Wandung in geschlossenem Zustand des Deckels mit den Stirnflächen der Kammerwandung eine luftdichte Dichtung bildet, dadurch gekennzeichnet, daß die Wandungen des Deckels aus einer äußeren formstabilen Trägerplatte (1) und einer inneren flexiblen Abdeckplatte (2) bestehen, zwischen denen mehrere längs der Kammerwandung verteilte Pufferelemente (5) aus elastischem Material angeordnet sind und daß am Magnetbandgerät Haltemittel (6) vorgesehen sind, die der Trägerplatte (1) derart räumlich zugeordnet sind, daß die Trägerplatte (1) bei geschlossenem Zustand in Richtung gegen die Kammerwandung gedrückt wird.

2. Abdeckvorrichtung nach Anspruch 1, dadurch gekennzeichnet, daß die Pufferelemente (5) aus Gummi oder dergleichen bestehen.

3. Abdeckvorrichtung nach Anspruch 1 oder 2, dadurch gekennzeichnet, daß die Pufferelemente (5) in Quader- oder Zylinderform ausgebildet und mit einer Innenbohrung versehen sind.

4. Abdeckvorrichtung nach einem der vorhergehenden Ansprüche, dadurch gekennzeichnet, daß die flexible Abdeckplatte (2) mit Führungsbolzen (3) versehen ist, die in entsprechend geformte Durchbrechungen in der Trägerplatte (1) eintauchen, so daß die Abdeckplatte (2) in Achsrichtung der Führungsbolzen (3) relativ zur Trägerplatte (1) bewegbar gelagert ist.

5. Abdeckvorrichtung nach einem der vorhergehenden Ansprüche, dadurch gekennzeichnet, daß die flexible Abdeckplatte (2) aus durchsichtigem Material besteht.

6. Abdeckvorrichtung nach einem der vorhergehenden Ansprüche, dadurch gekennzeichnet, daß die Trägerplatte (1) aus undurchsichtigem Material besteht und ein oder mehrere Sichtfenster (8) aufweist.

**Claims**

1. Covering device for a low-pressure chamber which is arranged in a magnetic tape device and which serves to accommodate a tape buffer loop which runs between tape spool and tape driving mechanism, consisting of a twowalled lid which pivotably secured to the housing of the magnetic tape device and whose inner together with the end surfaces of the chamber wall forms an air-tight seal in the closed state of the lid, characterised in that the walls of the lid consist of an outer form-stable carrier plate (1) and an inner flexible covering plate (2), between which are arranged a plurality of buffer elements (5) which are distributed along the chamber wall and made of a resilient material, and that the magnetic tape device is provided with holding means (6) which are spatially assigned to the carrier plate (1) in such manner that in the closed state, the carrier plate (1) is pressed in the direction of the chamber wall.

2. Covering device as claimed in claim 1, characterised in that the buffer elements (5) consist of rubber or the like.

3. Covering device as claimed in claim 1 or 2, characterised in that the buffer elements (5) are shaped like a parallelepided or cylinder and are provided with an inner bore.

4. Covering device as claimed in one of the preceding claims, characterised in that the flexible covering plate (2) is provided with guide bolts (3) which are inserted into appropriately shaped apertures in the carrier plate (1), so that the covering plate (2) is mounted so as to be movable in the axial direction of the guide bolts (3) relative to the carrier plate (1).

5. Covering device as claimed in one of the preceding claims, characterised in that the flexible covering plate (2) consists of a translucent material.

6. Covering device as claimed in one of the preceding claims, characterised in that the carrier plate (1) consists of an opaque material and possesses one or more viewing windows (8).

**Revendications**

1. Dispositif de fermeture pour une chambre à dépression prévue dans un appareil à bande magnétique et destinée à recevoir une boucle de bande tampon s'étendant entre une bobine de bande et le mécanisme d'entraînement de la bande, constitué par un couvercle à deux parois, fixé à articulation sur le boîtier de l'appareil à bande magnétique, dont la paroi intérieure forme, lorsque le couvercle est dans son état fermé, un moyen d'étanchéité à l'air avec les faces frontales de la paroi de la chambre, caractérisé par le fait que les parois de couvercle sont constituées par une plaque de support extérieure (1) de forme stable et par une plaque de couverture intérieure (2) flexible entre lesquelles sont disposés plusieurs éléments amortisseurs (5) répartis le long de la paroi de la chambre et réalisés avec un matériau élastique, et que sur l'appareil à bande magnétique sont prévus des moyens de support (6) qui sont associés dans l'espace de telle manière à la plaque de support (1) que celle-ci, lorsqu'elle est à l'état fermé, est pressée en direction de la paroi de la chambre.

2. Dispositif de fermeture selon la revendication 1, caractérisé par le fait que les éléments amortisseurs (5) sont constitués avec du caoutchouc ou en matériau analogue.

3. Dispositif de fermeture selon la revendication 1, caractérisé par le fait que les éléments amortisseurs (5) sont réalisés avec une forme en cube ou en cylindre et sont pourvus d'un perçage intérieur.

4. Dispositif de fermeture selon l'une des revendications antérieures, caractérisé par le fait que la plaque de couverture flexible (2) est pourvue de chevilles de guidage (3) qui plongent dans des ouvertures conformées de façon correspondante dans la plaque de support (1), de manière que la plaque de couverture (2) est montée avec mobilité par rapport à la plaque de support (1), dans la direction axiale des chevilles de guidage (3).

5. Dispositif de fermeture selon l'une des revendications précédentes, caractérisé par le fait que la plaque de couverture flexible (2) est faite avec un matériau transparent.

6. Dispositif de fermeture selon l'une des revendications précédentes, caractérisé par le fait que la plaque de support (1) est faite avec un matériau opaque et comporte une ou plusieurs fenêtres d'observation (8).